# EUROPEAN PATENT APPLICATION

(11) **EP 3 757 503 A1**
(43) Date of publication of application: **30.12.2020**
(21) Application number: 19461549.8
(22) Date of filing: 26.06.2019
(51) Int. Cl.: F28F 9/02, B60H 1/00, F25B 39/04, F28D 21/00, F28D 9/00

(54) **HEAT EXCHANGER WITH A CONNECTOR**

(71) Applicant: Valeo Autosystemy SP. Z.O.O., 32-050 Skawina (PL)
(72) Inventor: POKRYWINSKI, Karol, 32 0505 SKAWINA (PL); STANEK, Lukasz, 32-050 SKAWIMA (PL); CICHOSZ, Lukasz, 32-050 Skawina (PL)
(74) Representative: Bialkowski, Adam

(57) **Abstract**

A heat exchanger with a connector is described. The heat exchanger includes a core and an intermediate part. The core is formed by combining a plurality of heat exchanger elements together. The core further comprising at least two fluid channels formed by the plurality of heat exchanger elements to enable heat exchange between fluids flowing through the at least two fluid channels. The intermediate part is connected to a last element of the plurality of heat exchanger elements of the core. The intermediate part is adapted to fluidically connect the core with the connector.

## Description

The present invention generally relates to heat exchangers, and in particularly, to a condenser having an intermediate box to provide refrigerant to a heat exchanger core.

Generally, Heating Ventilation and Air-Conditioning, hereinafter HVAC systems, include a condenser, an evaporator, a compressor, and an expansion valve. Further, refrigerant flows through the HVAC system to collect heat from the vehicle cabin to provide comfort driving to the passengers. The compressor receives the vaporized refrigerant and pumps the compressed refrigerant to the condenser. The condenser is adapted to condensate the compressed vaporized refrigerant into liquid refrigerant. Ideally, the condenser enables phase change of the refrigerant i.e., vapor into liquid. The condenser may include a fluid circuit to enable heat exchange between the refrigerant entering into the condenser and a secondary fluid. The secondary fluid can be water or air, based on the type of condenser. Thereafter, the liquefied refrigerant flows through the expansion valve to reduce the pressure of the liquefied refrigerant, and enters the evaporator to collect heat from the vehicle cabin.

Usually, the condenser includes two fluid circuits to enable heat exchange therebetween. In one example, one fluid can be a refrigerant and another fluid can be a cooling fluid. The condenser may include a core formed by sandwiching heat exchange plates, and the refrigerant flows through the heat exchange plates. The cooling fluid, for example water, flows around and in-between the heat exchange plates, so as to enable heat exchange between the refrigerant and the cooling fluid. Conventionally, a piping is connected to the core to provide the refrigerant to the one or more heat exchange plates or to receive the refrigerant from the one or more heat exchange plates. The conventional design of the condenser having the pipe projecting out from the core may be cumbersome to packaging in the vehicle in a space optimized way.

Accordingly, there is a need for condenser that can be optimally packed in the vehicle.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

In view of the foregoing, an embodiment of the invention herein provides a heat exchanger with a connector. The heat exchanger includes a core and an intermediate part. The core is formed by combining a plurality of heat exchanger elements together. The core further comprises at least two fluid channels formed by the plurality of heat exchanger elements to enable heat exchange between fluids flowing through the at least two fluid channels. The intermediate part is connected to a last element of the plurality of heat exchanger elements of the core. The intermediate part is adapted to fluidically connect the core with the connector.

In one embodiment, the heat exchanger is a water-cooled condenser.

In another embodiment, the intermediate part comprises a plate provided with flat connect portions adapted to be connected to the core and at least one guiding channel configured on the plate to fluidically connect the connector with an opening formed on the core.

In one embodiment, the at least one guiding channel is at least partially open on a side facing the core.

In yet another embodiment, the intermediate part further comprises multiple corrugated channels disposed within the intermediate part to cooperate with the heat exchange fluid flowing there through. The multiple corrugated channels are brazed to the intermediate part and are configured to provide additional connection between the intermediate part and the last element of the plurality of heat exchanger elements.

In one embodiment, the intermediate part is brazed to the last element of the plurality of heat exchanger elements of the core. The plurality of heat exchanger elements is any one of heat exchange tubes and heat exchange plates. In one example, the intermediate part is of an aluminum alloy.

In another embodiment, the intermediate part is integrally formed on the last element of the plurality of heat exchanger elements of the core. The port is any one of an inlet or an outlet.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
Fig. 1 illustrates a schematic view of a heat exchanger, in accordance with an embodiment of the present invention;
Fig. 2A illustrates a perspective view of an intermediate part of the heat exchanger of Fig. 1, in accordance with an embodiment of the present invention;
Fig. 2B illustrates cross-sectional views of the intermediate part of the heat exchanger of Fig. 1, in accordance with an embodiment of the present invention;
Fig. 2C illustrates a plate provided on a core of the heat exchanger of Fig. 1 to provide fluid communication between the core and the connector;
Fig. 3A illustrates an assembled view of the connector mounted on the intermediate part of the heat exchanger of Fig. 1; and
Fig. 3B illustrates a schematic view of the core of Fig. 1, in accordance with an embodiment of the present invention.

It must be noted that the figures disclose the invention in a detailed enough way to be implemented, the figures helping to better define the invention if need be. The invention should however not be limited to the embodiment disclosed in the description.

The present invention relates to a heat exchanger, preferably a condenser, having an intermediate part to provide refrigerant to or receive it from a heat exchanger core. According to the aspect, the heat exchanger may include a heat exchanger core, an intermediate part, and a connector. The connector may be connected to other fluid conduits to receive heat exchange fluid, hereinafter referred to as refrigerant. The intermediate part may be sandwiched between the connector and the heat exchanger core to introduce/receive the refrigerant to/from the heat exchanger core. The heat exchanger core may include a plurality of heat exchange elements stacked together. The refrigerant may flow in the plurality of heat exchange elements, and a coolant may flow around and/or in-between the plurality of heat exchange elements to enable heat exchange between the refrigerant and the coolant. The intermediate part is provided to eliminate the need of a pipe that is adapted to fluidically connect the connector with the plurality of heat exchange elements. As there is no pipe in the heat exchanger extending from the core, the heat exchanger can be optimally packed in the vehicle. Further, the intermediate part may be formed by one shot brazing on the heat exchanger core which reduces block size of the heat exchanger and also reduces the number of process steps involved.

While aspects relating to an intermediate part provided on a last heat exchanger element to provide compact heat exchanger as described above and henceforth can be implemented in plurality of ways, the embodiments are described in the context of the following system(s).

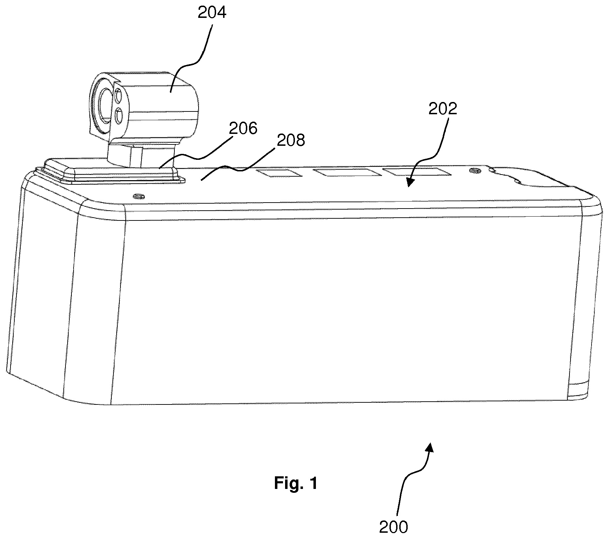

Fig. 1 illustrates a schematic view of a heat exchanger 200, in accordance with an embodiment of the present invention. The heat exchanger 200 can be a water-cooled condenser and provided in a HVAC system of a vehicle. The heat exchanger 200, hereinafter referred to as water condenser, includes a heat exchanger core 202, a connector 204, and an intermediate part 206. The heat exchanger core 202, hereinafter referred to as core, is formed by combining one or more heat exchanger elements stacked together, e.g. stacked plates of a convention plate heat exchanger. The one or more heat exchanger elements can be any one of heat exchanger tubes and heat exchanger plates. The one or more heat exchanger elements, hereinafter referred to as heat exchanger elements, form at least two fluid channels to enable heat exchange between fluids flowing through the at least two fluid channels. In one example, a first fluid channel amongst the at least two fluid channels is formed to enable flow of a first fluid into the heat exchanger elements, and a second fluid channel amongst the at least two fluid channels is formed to enable flow of a second fluid in-between adjacent heat exchanger elements, and around the heat exchanger elements, thereby enabling heat exchanger between the first fluid and the second fluid. Further, the first fluid is a refrigerant and the second fluid is coolant.

The water condenser further comprises the intermediate part 206 connected to a last element of the heat exchanger elements of the core 202. The intermediate part 206 may be integrally formed on the core 202. In other words, the intermediate part 206 is sandwiched between a last element 208 of the heat exchange elements and the connector 204. The intermediate part 206 further includes at least one port and is adapted to fluidically connect the core 202 with the port. In one embodiment, the port can be an inlet or an outlet. The intermediate part 206 is provided in between the last element 208 of the heat exchanger elements and the connector 204 to fluidically connect the port with the connector 204. Further, the connector 204 is fluidically connected to the core 202 through the port of the intermediate part 206. Further, shape and placement of the port are described in the forthcoming figures.

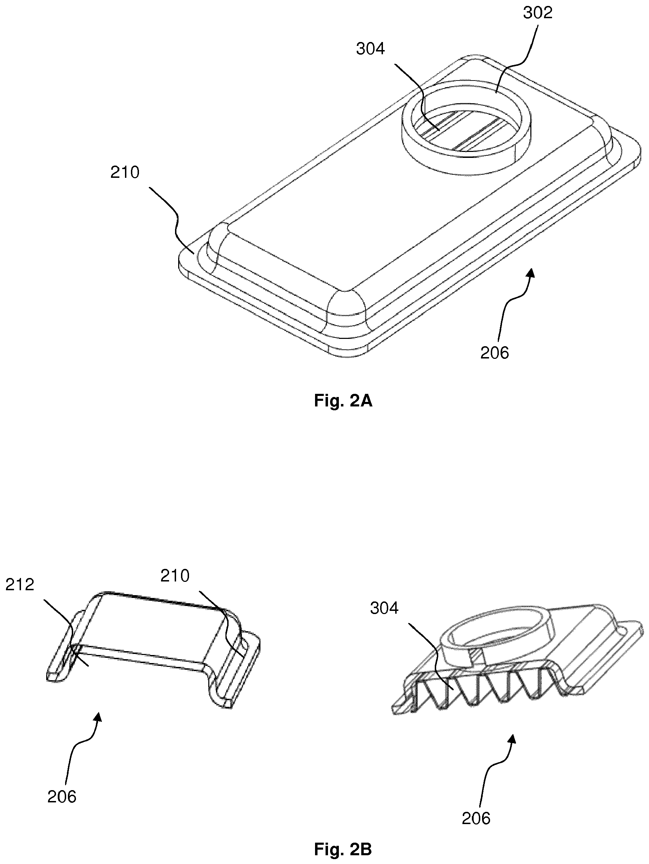

Fig. 2A illustrates a perspective view of the intermediate part 206 of the heat exchanger 200, particularly, the water condenser of Fig. 1, in accordance with an embodiment of the present invention. The intermediate part 206 is a refrigerant box that enables introduction/reception of the refrigerant to/from the core 202. The intermediate part 206 includes the port 302 provided on a top portion of the intermediate part 206. The port 302 may be coupled to the connector 204 to provide a fluid communication between the core 202 and the connector 204. In one example, the port 302 being circular port is provided on the top portion of the intermediate part 206 to enable fluid communication between the core 202 and the connector 204. In one embodiment, the intermediate part 206 is a semi-open rectangular part having the port 302 on the top portion, and an opening in a bottom portion of the intermediate part 206. The bottom portion of the intermediate part 206 is open and is in contact with the core 202 to enable a fluid communication between the intermediate part 206 and the core 202. In one example, the intermediate part 206 can be brazed on the core 202. In another example, the intermediate part 206 is integrally formed on the last element 208 of the heat exchanger elements. Further, the intermediate part 206 may include flat surfaces 210 formed at circumference of the intermediate part 206, adapted to be coupled to the core 202.

Fig. 2B illustrates cross-sectional views of the intermediate part 206 of the water condenser 200. In one embodiment, the intermediate part 206 may include a flow path 212 formed between the flat portion 210 of the intermediate part 206. The intermediate part 206 may further include multiple corrugated channels 304 disposed within the intermediate part 206 to cooperate with the refrigerant flowing there through. The multiple corrugated channels 304 may be formed in the flow path 212 of the intermediate part 206. As the intermediate part 206 may receive high pressure refrigerant, it may be necessary to provide reinforcement to the intermediate part 206 in-order to avoid any deformation of the intermediate part 206. To provide reinforcement to the intermediate part 206, the multiple corrugated channels 304, hereinafter referred to as corrugated channels, are disposed in the intermediate part 206. The corrugated channels 304 may be adapted to increase pressure drop of the high pressure refrigerant entering into the intermediate part 206. In one example, the corrugated channels 304 are brazed to the intermediate part 206. In another example, the corrugated channels 304 are integrally formed with the intermediate part 206. Further, the corrugated channels 304 are adapted to provide additional connection between the intermediate part 206 and the last element 208 of the heat exchanger elements. In one embodiment, the intermediate part 206 is any one of aluminum, an aluminum alloy or alike.

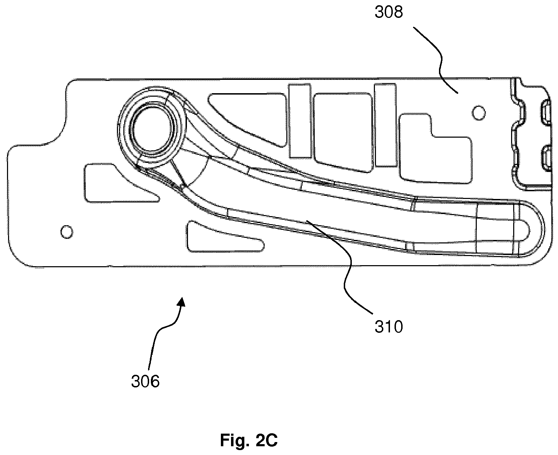

Fig. 2C illustrates a plate 306 provided on the core 202 to provide fluid communication between the core 202 and the connector 204, in accordance with an embodiment of the present invention. According to this embodiment of the invention, the plate 306 is formed between the intermediate part 206 and the core 202 of the water condenser 200. In this embodiment of the present invention, the intermediate part 206 may include the plate 306 having flat connect portions 308 and at least one guiding channel 310. The plate 306 may be provided on the top portion of the last element 208 of the heat exchanger elements. The flat connect portions 308 provided on the plate 308 are to enable aligned contact and connection between the plate 306 and the last element 208 of the heat exchanger elements 206. Further, the at least one guiding channel 310 is adapted to fluidically connect the connector 204 with an opening formed on the core 202. The at least one guiding channel 310 is fluidically connected to the port 302 of the intermediate part 206, thereby forming a fluid connection between the core 202 and the connector 204. The at least one guiding channel 310 may be partially open on a side facing towards the core 202, thereby forming a closed channel between the plate 306 and the core 202. In other words, the at least one guiding channel 310 being semi-opened channel formed on an inner side of the plate 306, and facing the core 202, thereby creating a closed channel. As the core 202 is utilized to form the closed guiding channel 310, the at least one guiding channel 310 occupies less space and requires less materials to form such channel, thereby eliminating space constraints in the condenser 200. The at least one guiding channel 310 is formed to introduce the refrigerant or to receive refrigerant from the core 202. The at least one guiding channel 310 may include fin disposed within the at least one guiding channel 310.

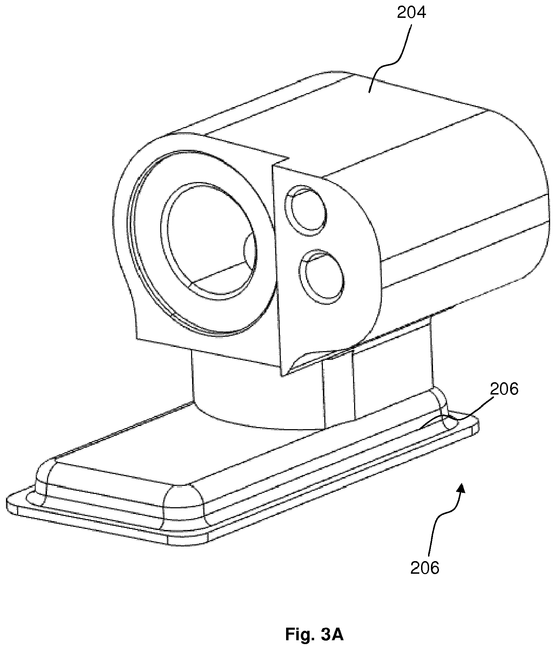

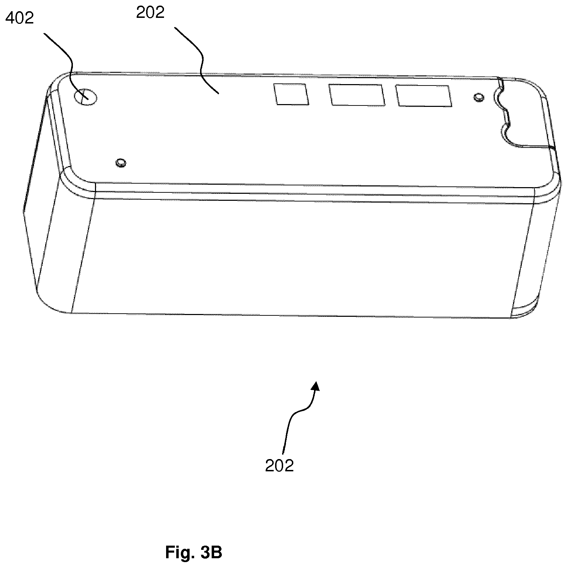

Fig. 3A illustrates an assembled view of the connector 204 mounted on the intermediate part 206 of Fig. 1. Fig. 3B illustrates a schematic view of the core 202 of Fig. 1. The refrigerant flows from the connector 204 the core 202 through the intermediate part 206. The intermediate part 206 may receive the high-pressure refrigerant from the connector 204 and causes pressure drop therein. The core 202 further includes the opening 402 to receive the refrigerant from the intermediate part 206 and to ingress the refrigerant into the first fluid channel formed in the heat exchanger elements. Thereafter, the refrigerant may exchange heat with the water flowing through the second fluid channel, and egress from the core 202. As there is no external pipe extending from the core 202 to provide refrigerant to the core 202, it is possible to optimally pack the water condenser 200 in the vehicle. Naturally, the flow of the refrigerant may be opposite, i.e. from the core to the connector.

In any case, the invention cannot and should not be limited to the embodiments specifically described in this document, as other embodiments might exist. The invention shall spread to any equivalent means and any technically operating combination of means.

## Claims

1. A heat exchanger (200) with a connector (204), comprising:
a core (202) formed by combining a plurality of heat exchanger elements together, wherein the core (202) further comprises at least two fluid channels formed by the plurality of heat exchanger elements to enable heat exchange between fluids flowing through the at least two fluid channels; and
an intermediate part (206) connected to a last element (208) of the plurality of heat exchanger elements of the core (202), wherein the intermediate part (206) is adapted to fluidically connect the core (202) with the connector (204).

2. The heat exchanger (200) as claimed in claim 1, wherein the heat exchanger (200) is a water-cooled condenser.

3. The heat exchanger (200) as claimed in any of the preceding claims, wherein the intermediate part (206) comprises a plate (306) provided with flat connect portions (308) adapted to be connected to the core (202) and at least one guiding channel (310) configured on the plate (306) to fluidically connect the connector (204) with an opening (402) on the core (202).

4. The heat exchanger (200) as claimed in any of the preceding claims, wherein the at least one guiding channel (310) is at least partially open on a side facing the core (202).

5. The heat exchanger (200) as claimed in any of the preceding claims, wherein the intermediate part (206) further comprises multiple corrugated channels (304) disposed within the intermediate part (206) to cooperate with the heat exchange fluid flowing there through.

6. The heat exchanger (200) as claimed in the preceding claim, wherein the multiple corrugated channels (304) are brazed to the intermediate part (206) and are configured to provide additional connection between the intermediate part (206) and the last element (208) of the plurality of heat exchanger elements.

7. The heat exchanger (200) as claimed in any of the preceding claims, wherein the intermediate part (206) is brazed to the last element of the plurality of heat exchanger elements of the core (202).

8. The heat exchanger (200) as claimed in any of the preceding claims, wherein the plurality of heat exchanger elements is any one of heat exchange tubes and heat exchange plates.

9. The heat exchanger (200) as claimed in any of the preceding claims, wherein the intermediate part (206) is of an aluminum alloy.

10. The heat exchanger (200) as claimed in claim 1, the intermediate part (206) is integrally formed on the last element (208) of the plurality of heat exchanger elements of the core (202).

11. The heat exchanger (200) as claimed in any of the preceding claims, wherein the port (302) is any one of an inlet or an outlet.
